(19) Europäisches Patentamt / European Patent Office / Office européen des brevets

(11) **EP 4 286 462 B1**

(12) **EUROPEAN PATENT SPECIFICATION**

(45) Date of publication and mention
of the grant of the patent:
**25.03.2026   Bulletin 2026/13**

(21) Application number: **22745656.3**

(22) Date of filing: **18.01.2022**

(51) International Patent Classification (IPC):
*C08J 9/18* (2006.01)          *B29C 44/34* (2006.01)

(52) Cooperative Patent Classification (CPC):
**C08J 9/122; B29C 44/3461; C08J 9/18;**
B29K 2023/12; C08J 2203/06; C08J 2323/14

(86) International application number:
**PCT/JP2022/001565**

(87) International publication number:
**WO 2022/163433 (04.08.2022 Gazette 2022/31)**

(54) **MANUFACTURING METHOD AND MANUFACTURING DEVICE FOR FOAMED PARTICLES**

HERSTELLUNGSVERFAHREN UND HERSTELLUNGSVORRICHTUNG FÜR GESCHÄUMTE
PARTIKEL

PROCÉDÉ DE FABRICATION ET DISPOSITIF DE FABRICATION POUR PARTICULES
EXPANSÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **28.01.2021   JP 2021012361**

(43) Date of publication of application:
**06.12.2023   Bulletin 2023/49**

(73) Proprietor: **Kaneka Corporation
Osaka-shi, Osaka 530-8288 (JP)**

(72) Inventor: **HAYASE, Yuki
Settsu-shi, Osaka 566-0072 (JP)**

(74) Representative: **Vossius & Partner
Patentanwälte Rechtsanwälte mbB
Siebertstraße 3
81675 München (DE)**

(56) References cited:
WO-A1-2005/085337      WO-A1-2005/085337
WO-A1-2020/158061      WO-A1-2020/170694
WO-A1-2020/170694      WO-A1-2023/162962
JP-A- H0 559 210       JP-A- H10 146 856

**Description**

Technical Field

The present invention relates to a method and a device for producing expanded particles.

Background Art

It is known that expanded particles made of a thermoplastic resin are produced by a method (hereinafter, "pressure-release expansion method") in which: thermoplastic resin particles are dispersed into water containing a dispersing agent in a pressure-resistant vessel; a blowing agent is then added; the thermoplastic resin particles are kept at a high temperature under a high pressure so as to be impregnate with the blowing agent; and, thereafter, the thermoplastic resin particles are released into a low pressure atmosphere. Examples of a method for producing expanded particles by the pressure-release expansion method include a technique disclosed in Patent Literature 1.

According to the pressure-release expansion method, mini-pellets which contain thermoplastic resin particles, an inorganic dispersing agent and a dispersion auxiliary agent, and a blowing agent are fed into a pressure-resistant vessel together with water. Then, after the pressure-resistant vessel is heated and a mixture in the pressure-resistant vessel is adjusted to a predetermined temperature, the pressure inside the pressure-resistant vessel is adjusted to a predetermined pressure. This causes the thermoplastic resin particles inside the pressure-resistant vessel to be impregnated with the blowing agent.

In the technique disclosed in Patent Literature 1, the thermoplastic resin particles impregnated with the blowing agent are released into a low pressure atmosphere by opening a flush valve provided at a bottom of the pressure-resistant vessel.

Citation List

[Patent Literature]

[Patent Literature 1]

International Publication No. WO 2020/158061 Document WO2005/085337 A1 discloses a method and a device for producing expanded particles.

Summary of Invention

Technical Problem

However, in the pressure-release expansion method with use of a flush valve as disclosed in Patent Literature 1, there is room for improvement in variation in expansion ratio of expanded particles.

An object of an aspect of the present invention is to provide a method and a device for producing expanded particles in each of which a variation in expansion ratio of the expanded particles is improved in a pressure-release expansion method with use of a flush valve.

Solution to Problem

In order to solve the above problem, a method according to an aspect of the present invention for producing expanded particles includes an expansion step of expanding polyolefin-based resin particles to obtain polyolefin-based resin expanded particles, by dispersing the polyolefin-based resin particles in an aqueous dispersion medium in a pressure-resistant vessel, applying heat and pressure to the polyolefin-based resin particles so that a temperature of the polyolefin-based resin particles is increased to not less than a softening temperature of the polyolefin-based resin, and thereafter releasing the polyolefin-resin particles into a container at a pressure lower than an internal pressure of the pressure-resistant vessel, the expansion step including: a first step of releasing the polyolefin-based resin particles into the container at the lower pressure from the pressure-resistant vessel through a flush valve which includes a valve main body and a valve disc, wherein the pressure resistant vessel and the valve main body communicate with each other via an inlet, and the valve disc is a piston that moves in an up-and-down direction inside the valve main body and opens or closes the inlet; and a second step of leading the expanded particles which have been released from the flush valve, in an oblique direction relative to a direction in which the valve disc of the flush valve extends, in the second step, provided that an angle of the direction in which the expanded particles are led relative to the direction in which the valve disc of the flush valve extends is defined as C, the angle C being 40° < C < 90°.

In order to solve the above problem, a device according to an aspect of the present invention for producing expanded particles includes: a pressure-resistant vessel for expanding polyolefin-based resin particles; a flush valve for releasing, into a low-pressure container, the polyolefin-based resin particles in the pressure-resistant vessel; and a release pipe for releasing expanded particles which have been released from the flush valve, the flush valve including a valve main body and a valve disc, wherein the pressure resistant vessel and the valve main body communicate with each other via an inlet, and the valve disc is a piston that moves in an up-and-down direction inside the valve main body and opens or closes the inlet, the release pipe being connected to the valve main body of the flush valve so as to be inclined relative to a direction in which the valve disc extends, and provided that an angle of a direction in which the expanded particles are led relative to the direction in which the valve disc of the flush valve extends is defined as C, the angle C being 40° < C < 90°.

Advantageous Effects of Invention

An aspect of the present invention makes it possible to improve a variation in expansion ratio of expanded particles in a pressure-release expansion method with use of a flush valve.

Brief Description of Drawings

Fig. 1 is a view schematically illustrating an example of a device for producing expanded particles which is to be used in a production method in accordance with an embodiment of the present invention.
Fig. 2 is a cross-sectional view schematically illustrating a configuration of a flush valve provided in the device illustrated in Fig. 1.
Fig. 3 schematically shows a state in which the flush valve illustrated in Fig. 2 is opened; 301 is a side view and 302 is a top view.

Description of Embodiments

The following description will discuss an embodiment of the present invention. However, the present invention is not limited to the embodiment. The present invention is not limited to the configurations described below, but may be altered in various ways within the scope of the claims by a person skilled in the art. The present invention also encompasses, in its technical scope, any embodiment or example derived by combining technical means disclosed in respective differing embodiments and examples. Further, it is possible to form a new technical feature by combining the technical means disclosed in the respective embodiments. Furthermore, any numerical range expressed as "A to B" in the present specification means "not less than A and not more than B (i.e., a range from A to B which includes both A and B)" unless otherwise stated.

(Method for producing expanded particles)

As a result of diligent studies on the above problem, the inventor of the present application obtained the following unique finding: a variation in expansion ratio is improved in a case where, when contents in a pressure-resistant vessel are released by use of a flush valve, expanded particles which have been released through the flush valve are led in an oblique direction relative to a direction in which a valve disc of the flush valve extends. Then, on the basis of the above finding, the inventor of the present application has arrived at the present embodiment.

A method in accordance with the present embodiment for producing expanded particles (herein after, referred to as simply "the present method") includes an expansion step of obtaining polyolefin-based resin expanded particles by a pressure-release expansion method. In the expansion step, polyolefin-based resin particles are dispersed in an aqueous dispersion medium in a pressure-resistant vessel. Then, heat and pressure are applied to the polyolefin-based resin particles so that the temperature of the polyolefin-based resin particles is increased to not less than a softening temperature of the polyolefin-based resin. Thereafter, the polyolefin-resin particles are released into a container at a pressure lower than an internal pressure of the pressure-resistant vessel. As a result, the polyolefin-based resin particles are expanded. Consequently, the polyolefin-based resin expanded particles are obtained.

In the present method, the expansion step includes a first step and a second step. In the first step, the polyolefin-based resin particles are released into the container at the lower pressure from the pressure-resistant vessel through the flush valve which includes a valve main body and a valve disc. Further, in the second step, the expanded particles which have been released from the flush valve are led in an oblique direction relative to a direction in which the valve disc of the flush valve extends.

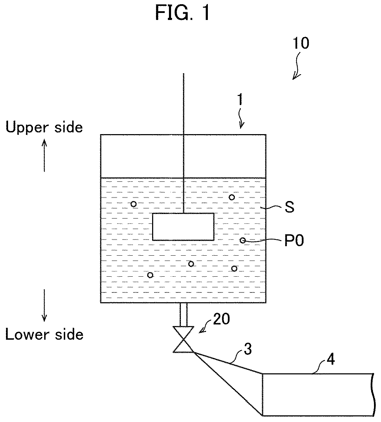

Fig. 1 is a view schematically illustrating an example of a production device 10 for producing expanded particles to be used in the present method. As illustrated in Fig. 1, the production device 10 includes a pressure-resistant vessel 1, a flush valve 20, a release pipe 3 (low-pressure container), and a transport pipe 4 (low-pressure container) which is for transporting the expanded particles. Here, a side where the flush valve 20 is present relative to the pressure-resistant vessel 1 is referred to as a lower side, whereas a side opposite to the side where the flush valve 20 is present is referred to as an upper side.

The pressure-resistant vessel 1 is a vessel for producing expanded particles by the pressure-release expansion method. Into the pressure-resistant vessel 1, polyolefin-based resin particles PO (which, hereinafter, may be also referred to as "resin particles P0"), a blowing agent, and an aqueous dispersion medium S are fed. Then, after the contents in the pressure-resistant vessel 1 are adjusted to a temperature of not less than a softening temperature of the resin particles PO by heating the pressure-resistant vessel 1, the pressure inside the pressure-resistant vessel 1 is adjusted to a predetermined pressure. This causes the resin particles PO inside the pressure-resistant vessel 1 to be impregnated with the blowing agent.

The flush valve 20 is provided at a bottom of the pressure-resistant vessel 1. The flush valve 20 is also called a tank valve. When the flush valve 20 is opened, the resin particles P0 pass through the flush valve 20 and are released into the release pipe 3 and the transport pipe 4 which form low-pressure spaces. As a result, expanded particles P are obtained.

The release pipe 3 is a pipe for releasing, into the transport pipe 4, the expanded particles P which have been released from the flush valve 20. The release pipe 3 is a pipe for connecting the flush valve 20 and the transport pipe 4 to each other. The release pipe 3 has a conical tubular shape that is tapered toward the flush valve 20.

Further, the transport pipe 4 is a pipe for transporting the expanded particles P. In the transport pipe 4, the expanded particles P are transported with transport wind, and are subjected to at least a washing process, a water discharge process, a dehydration process, and a drying process. The expanded particles P are then stored in a predetermined storage tank.

In the production device 10, various pieces of equipment other than the pressure-resistant vessel 1, the flush valve 20, the release pipe 3, and the transport pipe 4 are not particularly limited as long as the equipment can carry out at least the washing process, the water discharge process, the dehydration process, and the drying process described above. Examples of such equipment are illustrated in Figs. 6 and 7 of the International Publication No. WO 2020/158061.

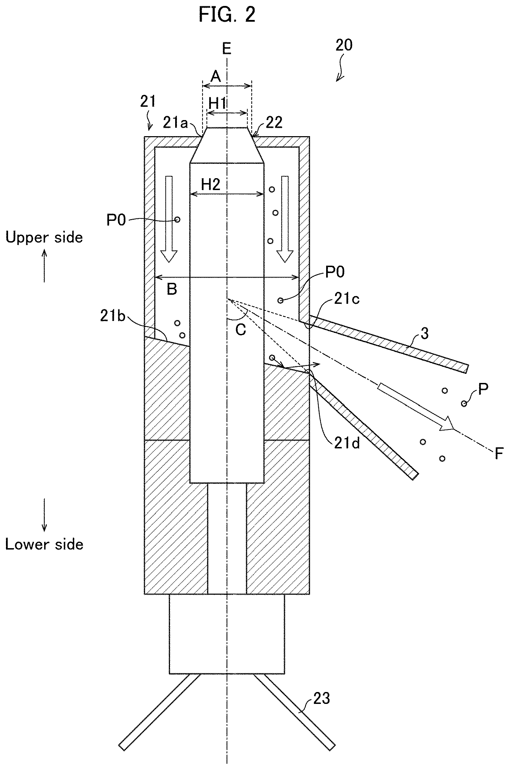

Fig. 2 is a cross-sectional view schematically illustrating a configuration of the flush valve 20 provided in the production device 10. As illustrated in Fig. 2, the flush valve 20 includes a valve main body 21, a valve disc 22, and an operation part 23.

The valve main body 21 has an inlet 21a, a guide surface 21b, and a connection port 21c. The inlet 21a is formed at a top of the valve main body 21. The pressure-resistant vessel 1 and the valve main body 21 communicate with each other via the inlet 21a. Therefore, the resin particles P0 in the pressure-resistant vessel 1 flow into the valve main body 21 via the inlet 21a. The guide surface 21b is a surface that is inclined with respect to an axis E of the valve disc 22, and is configured to guide, to the connection port 21c, the resin particles PO which have flown into the valve main body 21. The guide surface 21b is inclined such that an end 21d on a connection port 21c side is at a lowest position. The connection port 21c is formed at a connecting part between the valve main body 21 and the release pipe 3. The valve main body 21 and the release pipe 3 communicate with each other via the connection port 21c.

The valve disc 22 is a piston that moves in an up-and-down direction inside the valve main body 21, and opens or closes the inlet 21a. A tip end portion of the valve disc 22 on an inlet 21a side has a truncated cone shape whose width decreases toward the inlet 21a. In a portion above the guide surface 21b, a clearance is provided between an inner surface of the valve main body 21 and the valve disc 22. The clearance serves as a flow path of the resin particles PO that flow in through the inlet 21a. Further, in a portion below the guide surface 21, no clearance is provided between the inner surface of the valve main body 21 and the valve disc 22. In other words, in the valve main body 21, the resin particles PO do not flow below the guide surface 21b.

The operation part 23 is a part for operating the valve disc 22. When an operation is made on the operation part 23, the valve disc 22 moves in the up-and-down direction. The operation part 23 can be operated automatically or manually.

In the flush valve 20, an operation performed by the operation part 23 causes the valve disc 22 to descend from the valve main body 21. Then, in the flush valve 20, by changing a descending distance of the valve disc 22, an area occupied by a clearance between the inlet 21a and the valve disc 22 is changed. This allows for adjustment of a valve opening degree. As a result of opening the inlet 21a by the valve disc 22, the resin particles PO flow into the valve main body 21 at a low pressure and expand. As a result, the expanded particles P can be obtained.

Here, according to the production device 10 in accordance with the present embodiment, the release pipe 3 is connected to the valve main body 21 of the flush valve 20 so as to be inclined relative to a direction in which the valve disc 22 extends. In other words, an axis F of the release pipe 3 is inclined relative to the axis E of the valve disc 22.

Therefore, when the flush valve 20 is in an open state, the resin particles PO flow in through the inlet 21a together with the aqueous dispersion medium S. Then, the resin particles PO are guided to the connection port 21c by abutting on the guide surface 21b. Accordingly, the resin particles PO are released into the release pipe 3 and become the expanded particles P. Before the resin particles PO become the expanded particles P, the resin particles P0 abut on the guide surface 21b and a direction in which the resin particles P0 move changes. As a result, it is possible to obtain good expanded particles whose variation in expansion ratio is small.

Here, the guide surface 21b is a surface inclined relative to the axis E of the valve disc 22. Further, the guide surface 21b is inclined such that the end 21d on the connection port 21c side is at the lowest position. Therefore, the resin particles P0 smoothly reach the connection port 21c, abutting on the guide surface 21b. As a result, on the guide surface 21b, the resin particles PO are less likely to collide with each other, or the resin particles PO are less likely to be compressed. Consequently, it is possible to prevent generation of expanded particles P having fine cells at particle surfaces and/or generation of flat expanded particles P. Note that the guide surface 21b is not limited to a configuration in which the guide surface is inclined such that the end 21d on the connection port 21c side is at the lowest position. The guide surface 21b may be provided in any configuration, provided that the guide surface 21b is inclined to an extent that makes it possible to smoothly guide the resin particles PO to the connection port 21c. In a case where the guide surface 21b is inclined such that the end 21d of the connection port 21c side is at the lowest position, the inclination angle of the guide surface 21b relative to a surface perpendicular to the axis E is preferably more than 0° and not more than 60°, and more preferably not less than 15° and not more than 45°.

In this way, according to the present method, the expanded particles P which have been released from the flush valve 20 are led in an oblique direction relative to the direction in which the valve disc 22 of the flush valve 20 extends. Therefore, it is possible to obtain good expanded particles whose variation in expansion ratio is small.

In the present method, provided that an angle of the direction in which the expanded particles P are led relative to the direction in which the valve disc 22 of the flush valve 20 extends is defined as C, it is preferable that the angle C be $40° < C < 90°$ and preferably $50° \leq C \leq 70°$. In other words, the angle C at which the axis F of the release pipe 3 is inclined relative to the axis E of the valve disc 22 is set such that $40° < C < 90°$ and preferably $50° \leq C \leq 70°$. The angle C is more preferably in a range of $50° \leq C \leq 60°$. The angle C set in such a range makes it possible to reduce the variation in expansion ratio of the expanded particles.

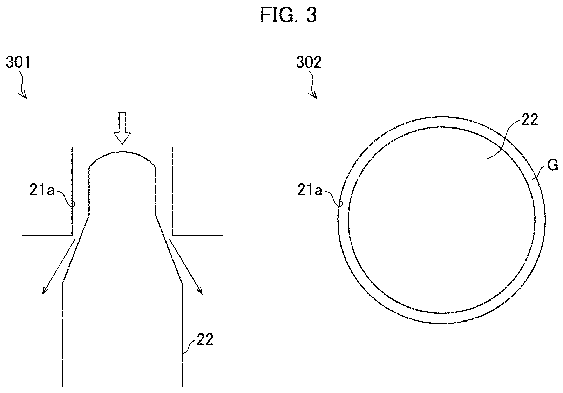

Here, the inventor of the present application has made further studies and has found that when the flush valve 20 is opened, a pressure-releasing speed of the resin particles PO affects the variation in expansion ratio. Fig. 3 schematically illustrates a state in which the flush valve 20 is opened; 301 of Fig. 3 is a side view and 302 of Fig. 3 is a top view.

As illustrated in 301 and 302 of Fig. 3, when the valve disc 22 is descended and obstruction to the inlet 21a due to the valve disc 22 is released, a clearance G is formed between the valve main body 21 and the valve disc 22. Walls constituting the clearance G are made up by an inner surface of the valve main body 21 and an outer surface of the valve disc 22, and the clearance G has a circular ring shape in top view. The pressure-releasing speed described above can be adjusted by an area of the clearance G

The clearance G is defined by A, which is the diameter of the inlet 21a (see Fig. 2), and H1, which is the diameter of the tip end portion on the inlet 21a side of the valve disc 22 (see Fig. 2). Further, the pressure-releasing speed is defined by the clearance G, B/A, and H2 (see Fig. 2), which is a diameter of an intermediate portion of the valve disc 22. Note that H2 is larger than A and smaller than B. Meanwhile, H1 is smaller than A.

In terms of decreasing the variation in expansion ratio, A and B are set such that, preferably, $1.0 < B/A \leq 4.0$ and more preferably, $1.5 \leq B/A \leq 3$. In the present method, the resin particles PO are released into the release pipe 3 from the pressure-resistant vessel 1, by setting the valve main body 21 of the flush valve 20 such that preferably $1.0 < B/A \leq 4.0$, and more preferably $1.5 \leq B/A \leq 3.0$. Further, B and H2 are set such that preferably $1.0 < B/H2 \leq 3.0$, more preferably $1.0 < B/H2 \leq 2.5$, and even more preferably $1.3 \leq B/H2 \leq 2.5$.

Further, it is preferable that A be 20 mm to 30 mm. It is preferable that H1 be 7 mm to 19 mm. Further, it is preferable that H2 be A + 2 mm to 8 mm.

(Regarding expanded particles P)

Here, raw materials of the expanded particles P to be used in the present embodiment may be any materials that can be expanded by the pressure-release expansion method described above. Such raw materials include at least polyolefin-based resin particles and a blowing agent, and an aqueous dispersion medium S. In addition, as the raw materials for the expanded particles, various additives may be added according to need, in addition to the polyolefin-based resin particles and the blowing agents. Examples of the additives include flame retardants, thermal stabilizers, radical generators, processing aids, weathering stabilizers, nucleating agents, expansion aids, antistatic agents, radiative heat transfer inhibitors, colorants, and the like. One type of these additives can be used alone or two or more types of the additives can be used in combination.

The polyolefin-based resin used in the present embodiment is not particularly limited. Such a polyolefin-based resin is, for example, a polyolefin-based resin shown in the International Publication No. WO 2020/158061.

The present invention is not limited to the embodiments, but can be altered by a skilled person in the art within the scope of the claims. The present invention also encompasses, in its technical scope, any embodiment derived by combining technical means disclosed in differing embodiments.

Examples

The following description will discuss embodiments of the present invention in more detail with Examples and Comparative Examples. Note, however, that the embodiments of the present invention is not limited to these Examples and Comparative Examples.

<Measurement of variation in expansion ratio of expanded particles>

With use of standard sieves (11 types of sieves with respective nominal dimensions of 1, 1.18, 1.4, 1.7, 2, 2.36, 2.8, 3.35, 4, 4.75, and 5.6) according to JIS Z8801, 1 kilogram of polyolefin-based resin expanded particles was sieved. Then, the weight fraction Wi and the expansion ratio Ki of the polyolefin-based resin expanded particles remaining on each of the sieves were measured, and the average expansion ratio Kav was calculated from the following expression (1).

$$\mathrm{Kav} = \Sigma(\mathrm{Ki} \times \mathrm{Wi}) \ \dots \ \mathrm{Expression} \ (1)$$

(i represents each sieve)

Next, with use of the weight fraction Wi, the expansion ratio Ki, and the average expansion ratio Kav, a standard deviation δm of the expansion ratio was calculated from the following expression (2).

$$\sigma\mathrm{m} = [\Sigma\{\mathrm{Wi} \times (\mathrm{Kav} - \mathrm{Ki})^2\}]^{1/2} \ \dots \ \mathrm{Expression} \ (2)$$

(i represents each sieve)

Further, a variation R(%) in expansion ratio was obtained from the following expression (3).

Variation R (%) in expansion ratio = (σm/Kav) × 100                                      Expression (3)

Note that a variation in expansion ratio of less than 10% was defined as an acceptable level.

The expansion ratio Ki of the polyolefin-based resin expanded particles remaining on each of the sieves was determined as follows. First, the weight Gi of the polyolefin-based resin expanded particles remaining on each of the sieves was accurately weighed up to 0.001 g (rounded off in the fourth place after the decimal point). Then, the polyolefin-based resin expanded particles, which had been weighed and whose weight was known, were submerged in water inside a measuring cylinder in which 100 ml of water at 23°C was accommodated. From a scale of a water surface that was elevated at that time, the volume yi (cm$^3$) of the polyolefin-based resin expanded particles was read. Then, the weight Gi (g) of the polyolefin-based resin expanded particles was divided by the volume yi (cm$^3$) of the polyolefin-based resin expanded particles. By converting this quotient into the unit of g/L, the apparent density di of the polyolefin-based resin expanded particles remaining on each of the sieves was determined. Finally, the expansion ratio Ki = ds/di was obtained from a ratio of the density ds (= 900 g/L) of a base material resin.

[Example 1]

(Production of resin particles)

An ethylene-propylene random copolymer (having a density of 0.90 g/cm$^3$; an ethylene content of 3%; a melting point of 145°C, MI = 7.5 g/10 min, and a bending elastic modulus of 1000 MPa), which was a polyolefin-based resin, was fed to a φ26-mm biaxial extruder [manufactured by Toshiba Machine Co., Ltd., TEM26-SX], and melt-kneaded. Thereafter, the aforesaid copolymer was extruded from a cylindrical die having a diameter of φ 1.2 mm. After cooled with water, the copolymer thus extruded was cut by a cutter, so that columnar resin composition particles (pellets) (1.2 mg/grain) each made of a polyolefin-based resin were obtained. Resultant resin particles had a melting point of 145°C, and a density of 0.90 g/cm$^3$ which was measured according to JIS K 7112.

(Production of expanded particles)

Together with 200 parts by weight of water, 100 parts by weight of the resultant resin particles, 0.5 parts by weight of tricalcium phosphate [manufactured by Taihei Chemical Industrial Co., Ltd.] as a dispersing agent, and 0.03 parts by weight of sodium alkyl sulfonate (sodium n-paraffin sulfonate) [manufactured by Kao Corporation, LATEMUL PS] as a dispersion auxiliary agent were fed into a pressure-resistant vessel. Thereafter, 3.5 parts by weight of carbon dioxide was fed. A resultant aqueous dispersion slurry was heated to 151°C while being stirred in the pressure-resistant vessel. The pressure inside the pressure-resistant vessel at this time was approximately 1.7 MPa. Thereafter, additional carbon dioxide was injected and the pressure was increased to 2.2 MPa. After the pressure-resistant vessel was kept at a predetermined expansion temperature and at a predetermined expansion pressure for 20 minutes, the aqueous dispersion slurry inside the pressure-resistant vessel was released into a low-pressure container from the pressure-resistant vessel through a flush valve, so that expanded particles were obtained. In this step, the inlet diameter (A) of the flush valve was 25 mm, the inner diameter (B) of a valve main body of the flush valve was 38 mm, and the angle (C) of a direction in which the expanded particles are led relative to a direction in which a valve disc of the flush valve extends was set to 60°. For the expanded particles obtained, an expansion ratio and a variation in expansion ratio were measured.

[Example 2]

Except that the angle (C) was set to 50°, expanded particles were obtained as in Example 1. For the expanded particles obtained, an expansion ratio and a variation in expansion ratio were measured.

[Example 3]

Except that the angle (C) was set to 70°, expanded particles were obtained as in Example 1. For the expanded particles obtained, an expansion ratio and a variation in expansion ratio were measured.

[Example 4]

Except that the inlet diameter (A) of the flush valve was set to 25 mm and the inner diameter (B) of the valve main body of the flush valve was set to 75 mm, expanded particles were obtained as in Example 1. For the expanded particles obtained, an expansion ratio and a variation in expansion ratio were measured.

[Comparative Example 1]

Except that the angle (C) was set to 40°, expanded particles were obtained as in Example 1. For the expanded particles obtained, an expansion ratio and a variation in expansion ratio were measured.

[Comparative Example 2]

Except that the angle (C) was set to 90°, expanded particles were obtained as in Example 1. For the expanded particles obtained, an expansion ratio and a variation in expansion ratio were measured.

Table 1 shows measurement results of variations in expansion ratio of expanded particles of Examples 1 to 4 and Comparative Examples 1 and 2.

[Table 1]

| | | Inlet diameter (A) of flush valve | Diameter (B) of flush valve | B/A | Diameter (H2) of valve disc | B/H2 | Angle (C) of flow path | Expansion ratio | Variation in expansion ratio |
|---|---|---|---|---|---|---|---|---|---|
| | | mm | mm | - | mm | - | ° | time s | % |
| | Example 1 | 25 | 38 | 1.5 | 30 | 1.3 | 60 | 14 | 3 |
| | Example 2 | 25 | 38 | 1.5 | 30 | 1.3 | 50 | 14 | 3 |
| | Example 3 | 25 | 38 | 1.5 | 30 | 1.3 | 70 | 13 | 4 |
| | Example 4 | 25 | 75 | 3.0 | 30 | 2.5 | 60 | 13 | 6 |
| | Comparative Example 1 | 25 | 38 | 1.5 | 30 | 1.3 | 40 | 14 | 13 |
| | Comparative Example 2 | 25 | 38 | 1.5 | 30 | 1.3 | 90 | 13 | 13 |

It has been found from the results in Table 1 that the variation in expansion ratio was favorable for the expanded particles of each of Examples 1 to 4 since the variation was not more than 10%. On the other hand, the variation in expansion ratio was unfavorable for the expanded particles of each of Comparative Examples 1 and 2, since the variation was more than 10%. Therefore, it has been found that the expanded particles of Examples 1 to 4 had a reduced variation in expansion ratio as compared to the expanded particles of Comparative Examples 1 and 2. Further, it has been found from a comparison between Examples 1 to 3 and Comparative Examples 1 and 2 that the variation in expansion ratio was favorable in cases where $50° \leq C \leq 70°$.

Reference Signs List

1 pressure-resistant vessel
3 release pipe
4 transport pipe
10 production device
20 flush valve
21 valve main body
21a inlet
22 valve disc
PO resin particles
P expanded particles
S aqueous dispersion medium

**Claims**

1. A method for producing expanded particles, the method comprising

   an expansion step of expanding polyolefin-based resin particles to obtain polyolefin-based resin expanded particles, by dispersing the polyolefin-based resin particles in an aqueous dispersion medium in a pressure-resistant vessel, applying heat and pressure to the polyolefin-based resin particles so that a temperature of the polyolefin-based resin particles is increased to not less than a softening temperature of the polyolefin-based resin, and thereafter releasing the polyolefin-resin particles into a container at a pressure lower than an internal pressure of the pressure-resistant vessel,
   the expansion step including:

   a first step of releasing the polyolefin-based resin particles into the container at the lower pressure from the pressure-resistant vessel through a flush valve which includes a valve main body and a valve disc, wherein the pressure-resistant vessel and the valve main body communicate with each other via an inlet, and the valve disc is a piston that moves in an up-and-down direction inside the valve main body and opens or closes the inlet; and
   a second step of leading the expanded particles which have been released from the flush valve, in an oblique direction relative to a direction in which the valve disc of the flush valve extends,

   in the second step, provided that an angle of the direction in which the expanded particles are led relative to the direction in which the valve disc of the flush valve extends is defined as C, the angle C being $40° < C < 90°$.

2. The method according to claim 1, wherein
   in the first step, provided that a diameter of an inlet of the valve main body of the flush valve is defined as A and an inner diameter of the valve main body is defined as B, B/A is set such that $1.0 < B/A \leq 4.0$ so as to cause the polyolefin-based resin particles to be released from the pressure-resistant vessel into the container at the lower pressure.

3. The method according to claim 1 or 2, wherein
   in the first step, provided that a diameter of an intermediate portion of the valve disc is defined as H2 and an inner diameter of the valve main body is defined as B, B and H2 are set such that $1.0 < B/H2 \leq 3.0$.

4. The method according to any one of claims 1 to 3, wherein a diameter A of an inlet of the valve main body of the flush valve is 20 mm to 30 mm.

5. The method according to any one of claims 1 to 4, wherein a diameter H1 of a tip end portion of the valve disc is 7 mm to 19 mm.

6. The method according to any one of claims 1 to 5, wherein a diameter H2 of an intermediate portion of the valve disc is (a diameter A of an inlet of the valve main body of the flush valve) + 2 mm to 8 mm.

7. The method according to any one of claims 1 to 6, wherein a variation in expansion ratio of the expanded particles is less than 10%.

8. A device for producing expanded particles, comprising:

a pressure-resistant vessel for expanding polyolefin-based resin particles;
a flush valve for releasing, into a low-pressure container, the polyolefin-based resin particles in the pressure-resistant vessel; and
a release pipe for releasing expanded particles which have been released from the flush valve,
the flush valve including a valve main body and a valve disc, wherein the pressure-resistant vessel and the valve main body communicate with each other via an inlet, and the valve disc is a piston that moves in an up-and-down direction inside the valve main body and opens or closes the inlet,
the release pipe being connected to the valve main body of the flush valve so as to be inclined relative to a direction in which the valve disc extends, and
provided that an angle of a direction in which the expanded particles are led relative to the direction in which the valve disc of the flush valve extends is defined as C, the angle C being 40° < C < 90°.

9. The device according to claim 8, wherein:

the valve main body communicates with the release pipe via a connection port;
the valve main body has a guide surface that guides, to the connection port, the polyolefin-based resin particles which have flown into the valve main body; and
the guide surface is inclined relative to an axis of the valve disc.

10. The device according to claim 8 or 9, wherein provided that a diameter of an inlet of the valve main body of the flush valve is defined as A and an inner diameter of the valve main body is defined as B, B/A is set such that $1.0 < B/A \leq 3.5$.

11. The device according to any one of claims 8 to 10, wherein provided that a diameter of an intermediate portion of the valve disc is defined as H2 and an inner diameter of the valve main body is defined as B, B and H2 are set such that $1.0 < B/H2 \leq 3.0$.

12. The device according to any one of claims 8 to 11, wherein a diameter A of an inlet of the valve main body of the flush valve is 20 mm to 30 mm.

13. The device according to any one of claims 8 to 12, wherein a diameter H1 of a tip end portion of the valve disc is 7 mm to 19 mm.

14. The device according to any one of claims 8 to 13, wherein a diameter H2 of an intermediate portion of the valve disc is (a diameter A of an inlet of the valve main body of the flush valve) + 2 mm to 8 mm.

15. The device according to any one of claims 8 to 14, wherein a variation in expansion ratio of the expanded particles is less than 10%.

**Patentansprüche**

1. Ein Verfahren zur Herstellung expandierter Partikel, wobei das Verfahren umfasst

einen Expansionsschritt des Expandierens von Harzpartikeln auf Polyolefinbasis, um expandierte Harzpartikel auf Polyolefinbasis zu erhalten, durch Dispergieren der Harzpartikel auf Polyolefinbasis in einem wässrigen Dispersionsmedium in einem druckfesten Behältnis, Anwenden von Wärme und Druck auf die Harzpartikel auf Polyolefinbasis derart, dass eine Temperatur der Harzpartikel auf Polyolefinbasis auf nicht weniger als eine Erweichungstemperatur des Harzes auf Polyolefinbasis erhöht wird, und anschließendes Ablassen der Polyolefin-Harzpartikel in einen Behälter bei einem Druck, der niedriger ist als ein Innendruck des druckfesten Behältnisses,

wobei der Expansionsschritt beinhaltet:

einen ersten Schritt des Ablassens der Harzpartikel auf Polyolefinbasis in den Behälter bei dem niedrigeren Druck aus dem druckfesten Behältnis durch ein Spülventil, das einen Ventilhauptkörper und eine Ventilscheibe beinhaltet, wobei das druckfeste Behältnis und der Ventilhauptkörper über einen Einlass miteinander in Verbindung stehen und die Ventilscheibe ein Kolben ist, der sich in einer Auf- und Ab-Richtung im Inneren des Ventilhauptkörpers bewegt und den Einlass öffnet oder schließt; und

einen zweiten Schritt des Führens der expandierten Partikel, die aus dem Spülventil abgelassen wurden, in einer schrägen Richtung bezogen auf eine Richtung, in der sich die Ventilscheibe des Spülventils erstreckt, wobei in dem zweiten Schritt, mit der Maßgabe, dass ein Winkel der Richtung, in der die expandierten Partikel bezogen auf die Richtung, in der sich die Ventilscheibe des Spülventils erstreckt, geführt werden, als C definiert ist, der Winkel C 40° < C < 90° beträgt.

2. Das Verfahren nach Anspruch 1, wobei
in dem ersten Schritt, mit der Maßgabe, dass ein Durchmesser eines Einlasses des Ventilhauptkörpers des Spülventils als A definiert ist und ein Innendurchmesser des Ventilhauptkörpers als B definiert ist, B/A derart eingestellt ist, dass $1,0 < B/A \leq 4,0$, um zu bewirken, dass die Harzpartikel auf Polyolefinbasis aus dem druckfesten Behältnis in den Behälter mit dem niedrigeren Druck abgelassen werden.

3. Das Verfahren nach Anspruch 1 oder 2, wobei
in dem ersten Schritt, mit der Maßgabe, dass ein Durchmesser eines Zwischenabschnitts der Ventilscheibe als H2 definiert ist und ein Innendurchmesser des Ventilhauptkörpers als B definiert ist, B und H2 derart eingestellt sind, dass $1,0 < B/H2 \leq 3,0$.

4. Das Verfahren nach einem der Ansprüche 1 bis 3, wobei ein Durchmesser A eines Einlasses des Ventilhauptkörpers des Spülventils 20 mm bis 30 mm beträgt.

5. Das Verfahren nach einem der Ansprüche 1 bis 4, wobei ein Durchmesser H1 eines Spitzenendabschnitts der Ventilscheibe 7 mm bis 19 mm beträgt.

6. Das Verfahren nach einem der Ansprüche 1 bis 5, wobei ein Durchmesser H2 eines Zwischenabschnitts der Ventilscheibe (ein Durchmesser A eines Einlasses des Ventilhauptkörpers des Spülventils) + 2 mm bis 8 mm beträgt.

7. Das Verfahren nach einem der Ansprüche 1 bis 6, wobei eine Abweichung des Expansionsverhältnisses der expandierten Partikel weniger als 10% beträgt.

8. Eine Vorrichtung zur Herstellung expandierter Partikel, umfassend:

ein druckfestes Behältnis zum Expandieren von Harzpartikeln auf Polyolefinbasis;
ein Spülventil zum Ablassen der Harzpartikel auf Polyolefinbasis in dem druckfesten Behältnis in einen Niederdruckbehälter; und
eine Ablassleitung zum Ablassen expandierter Partikel, die aus dem Spülventil abgelassen wurden,
wobei das Spülventil einen Ventilhauptkörper und eine Ventilscheibe beinhaltet, wobei das druckfeste Behältnis und der Ventilhauptkörper über einen Einlass miteinander in Verbindung stehen und die Ventilscheibe ein Kolben ist, der sich in einer Auf- und Ab-Richtung im Inneren des Ventilhauptkörpers bewegt und den Einlass öffnet oder schließt,
wobei die Ablassleitung mit dem Ventilhauptkörper des Spülventils derart verbunden ist, dass sie bezogen auf eine Richtung, in der sich die Ventilscheibe erstreckt, geneigt ist, und
mit der Maßgabe, dass ein Winkel einer Richtung, in der die expandierten Partikel bezogen auf die Richtung, in der sich die Ventilscheibe des Spülventils erstreckt, geführt werden, als C definiert ist, wobei Winkel C 40° < C < 90° beträgt.

9. Die Vorrichtung nach Anspruch 8, wobei:

der Ventilhauptkörper über einen Verbindungsanschluss mit der Ablassleitung in Verbindung steht;
der Ventilhauptkörper eine Führungsfläche aufweist, welche die in den Ventilhauptkörper geströmten Harzpartikel auf Polyolefinbasis zum Verbindungsanschluss führt; und
die Führungsfläche bezogen auf eine Achse der Ventilscheibe geneigt ist.

10. Die Vorrichtung nach Anspruch 8 oder 9, wobei, mit der Maßgabe, dass ein Durchmesser eines Einlasses des Ventilhauptkörpers des Spülventils als A definiert ist und ein Innendurchmesser des Ventilhauptkörpers als B definiert ist, B/A derart eingestellt ist, dass $1,0 < B/A \leq 3,5$.

11. Die Vorrichtung nach einem der Ansprüche 8 bis 10, wobei, mit der Maßgabe, dass ein Durchmesser eines Zwischenabschnitts der Ventilscheibe als H2 definiert ist und ein Innendurchmesser des Ventilhauptkörpers als B definiert ist, B und H2 derart eingestellt sind, dass $1,0 < B/H2 \leq 3,0$.

12. Die Vorrichtung nach einem der Ansprüche 8 bis 11, wobei ein Durchmesser A eines Einlasses des Ventilhauptkörpers des Spülventils 20 mm bis 30 mm beträgt.

13. Die Vorrichtung nach einem der Ansprüche 8 bis 12, wobei ein Durchmesser H1 eines Spitzenendabschnitts der Ventilscheibe 7 mm bis 19 mm beträgt.

14. Die Vorrichtung nach einem der Ansprüche 8 bis 13, wobei ein Durchmesser H2 eines Zwischenabschnitts der Ventilscheibe (ein Durchmesser A eines Einlasses des Ventilhauptkörpers des Spülventils) + 2 mm bis 8 mm beträgt.

15. Die Vorrichtung nach einem der Ansprüche 8 bis 14, wobei eine Abweichung des Expansionsverhältnisses der expandierten Partikel weniger als 10% beträgt.


**Revendications**

1. Méthode pour produire des particules expansées, la méthode comprenant

une étape d'expansion dans laquelle des particules de résine à base de polyoléfine sont expansées afin que soient obtenues des particules expansées de résine à base de polyoléfine, par dispersion des particules de résine à base de polyoléfine dans un milieu de dispersion aqueuse dans un récipient résistant à la pression, application de chaleur et de pression aux particules de résine à base de polyoléfine de façon que la température des particules de résine à base de polyoléfine augmente au moins jusqu'au point de ramollissement de la résine à base de polyoléfine, et ensuite évacuation des particules de résine de polyoléfine dans un récipient sous une pression inférieure à la pression interne du récipient résistant à la pression,
l'étape d'expansion comprenant :

une première étape dans laquelle des particules de résine à base de polyoléfine sont évacuées dans le récipient sous la pression plus basse depuis le récipient à la pression par l'intermédiaire d'une vanne de purge qui comprend un corps principal de vanne et un disque de vanne, dans laquelle le récipient résistant à la pression et le corps principal de vanne communiquent l'un avec l'autre via une entrée, et le disque de vanne est un piston qui se déplace dans la direction verticale à l'intérieur du corps principal de vanne et ouvre ou ferme l'entrée ; et
une deuxième étape dans laquelle les particules expansées qui ont été évacuées de la vanne de purge sont dirigées dans une direction oblique par rapport à la direction dans laquelle s'étend le disque de vanne de la vanne de purge,
dans la deuxième étape, étant entendu que l'angle de la direction dans laquelle les particules expansées sont dirigées par rapport à la direction dans laquelle s'étend le disque de vanne de la vanne de purge est défini par C, l'angle C étant $40° < C < 90°$.

2. Méthode selon la revendication 1, dans laquelle, dans la première étape, étant entendu que le diamètre de l'entrée du corps principal de vanne de la vanne de purge est défini par A et le diamètre intérieur du corps principal de vanne est défini par B, le rapport B/A est établi de façon que $1,0 < B/A \leq 4,0$ afin de provoquer l'évacuation des particules de résine à base de polyoléfine depuis le récipient résistant à la pression dans le récipient sous la pression plus basse.

3. Méthode selon la revendication 1 ou 2, dans laquelle, dans la première étape, étant entendu que le diamètre de la partie intermédiaire du disque de vanne est défini par H2 et le diamètre intérieur du corps principal de vanne est défini par B, B et H2 sont établis de façon que 1,0 < B/H2 ≤ 3,0.

4. Méthode selon l'une quelconque des revendications 1 à 3, dans laquelle le diamètre A de l'entrée du corps principal de vanne de la vanne de purge est de 20 mm à 30 mm.

5. Méthode selon l'une quelconque des revendications 1 à 4, dans laquelle le diamètre H1 de la partie d'extrémité de pointe du disque de vanne est de 7 mm à 19 mm.

6. Méthode selon l'une quelconque des revendications 1 à 5, dans laquelle le diamètre H2 de la partie intermédiaire du disque de vanne est de (diamètre A de l'entrée du corps principal de vanne de la vanne de purge) + 2 mm à 8 mm.

7. Méthode selon l'une quelconque des revendications 1 à 6, dans laquelle la variation du taux d'expansion des particules expansées est inférieure à 10 %.

8. Dispositif pour produire des particules expansées, comprenant :

un récipient résistant à la pression pour expanser des particules de résine à base de polyoléfine ;
une vanne de purge pour évacuer, dans un récipient sous basse pression, les particules de résine à base de polyoléfine dans le récipient résistant à la pression ; et
un tuyau d'évacuation pour évacuer les particules expansées qui ont été évacuées depuis la vanne de purge, la vanne de purge comprenant un corps principal de vanne et un disque de vanne, dans laquelle le récipient résistant à la pression et le corps principal de vanne communiquent l'un avec l'autre via une entrée, et le disque de vanne est un piston qui se déplace dans la direction verticale à l'intérieur du corps principal de vanne et ouvre ou ferme l'entrée,
le tuyau d'évacuation étant connecté au corps principal de vanne de la vanne de purge de façon à être incliné par rapport à la direction dans laquelle s'étend le disque de vanne, et
étant entendu que l'angle de la direction dans laquelle les particules expansées sont dirigées par rapport à la direction dans laquelle s'étend le disque de vanne de la vanne de purge est défini par C, l'angle C étant 40° < C < 90°.

9. Dispositif selon la revendication 8, dans lequel :

le corps principal de vanne communique avec le tuyau d'évacuation via un orifice de connexion ;
le corps principal de vanne a une surface de guidage qui guide, vers l'orifice de connexion, les particules de résine à base de polyoléfine qui se sont écoulées dans le corps principal de vanne ; et
la surface de guidage est inclinée par rapport à l'axe du disque de vanne.

10. Dispositif selon la revendication 8 ou 9, dans lequel, étant entendu que le diamètre de l'entrée du corps principal de vanne de la vanne de purge est défini par A et le diamètre intérieur du corps principal de vanne est défini par B, le rapport B/A est établi de façon que 1,0 < B/A ≤ 3,5.

11. Dispositif selon l'une quelconque des revendications 8 à 10, dans lequel, étant entendu que le diamètre de la partie intermédiaire du disque de vanne est défini par H2 et le diamètre intérieur du corps principal de vanne est défini par B, B et H2 sont établis de façon que 1,0 < B/H2 ≤ 3,0.

12. Dispositif selon l'une quelconque des revendications 8 à 11, dans lequel le diamètre A de l'entrée du corps principal de vanne de la vanne de purge est de 20 mm à 30 mm.

13. Dispositif selon l'une quelconque des revendications 8 à 12, dans lequel le diamètre H1 de la partie d'extrémité de pointe du disque de vanne est de 7 mm à 19 mm.

14. Dispositif selon l'une quelconque des revendications 8 à 13, dans lequel le diamètre H2 de la partie intermédiaire du disque de vanne est de (diamètre A de l'entrée du corps principal de vanne de la vanne de purge) + 2 mm à 8 mm.

15. Dispositif selon l'une quelconque des revendications 8 à 14, dans lequel la variation du taux d'expansion des particules expansées est inférieure à 10 %.

FIG. 1

FIG. 2

FIG. 3

301

302

21a

22

21a

22

G

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020158061 A

- WO 2005085337 A1